# EUROPÄISCHE PATENTSCHRIFT

(11) **EP 2 620 558 B1**
(45) Veröffentlichungstag und Bekanntmachung des Hinweises auf die Patenterteilung: **14.09.2016**
(21) Anmeldenummer: 13151553.8
(22) Anmeldetag: 17.01.2013
(51) Int. Cl.: E03B 3/04, C02F 1/00, B01D 17/02

(54) **Verteileinheit, ihre Verwendung und ein System zur Filterung eines Gewässers**
Distributor unit, its use and a system for filtering of a body of water
Unité de dispersion, son utilisation et un système destinés à filtrer un cours d'eau

(30) Priorität: 25.01.2012 AT 932012
(43) Veröffentlichungstag der Anmeldung: 31.07.2013
(73) Patentinhaber: Wesner, Wolfgang, 1020 Wien (AT); Kurzmann, Heimo, 5302 Henndorf (AT)
(72) Erfinder: Wesner, Wolfgang, 1220 Wien (AT); Kurzmann, Heimo, 5302 Henndorf (AT); Schardt, Christian, 4643 Petenbach (AT); Kubacek, Franz, 1210 Wien (AT)
(74) Vertreter: Vinazzer, Edith

(56) Entgegenhaltungen:
- EP-A1- 1 288 165
- DE-A1- 19 634 595
- US-B1- 6 444 126

## Beschreibung

Die Erfindung betrifft eine Verteileinheit für den Einsatz in einem Gewässer zur kontrollierten Wasserversorgung von Filtereinheiten und/oder zum Betrieb von Wasser benützenden Einrichtungen. Die Erfindung betrifft ferner die Verwendung der Verteileinheit und ein System zur Filterung eines Gewässers.

Es ist eine Vielzahl von Anwendungen bekannt, in welchen eine mechanische und/oder biologische Aufbereitung von Wasser über diverse Filtereinheiten mit Filtermedien erfolgt. Sogenannte Langsamfilter, wie insbesondere Sandfilter, und Biofilter, insbesondere mit geschütteten Filtermaterialien, finden vor allem in der biologischen Badewasseraufbereitung und in der Trinkwasseraufbereitung Anwendung. Filtereinheiten mit verschiedenen Filtermedien finden auch Verwendung bei der Nachreinigung von Wasser in Kläranlagen, Abläufen und in der industriellen Wasseraufbereitung.

Zu den üblichen Filtermedien gehören anorganische Partikel, wie Kies, Steinbruch, Sand, Blähton, Glasschaum, Bims, Zeolith und dergleichen, ferner organische Partikel, wie diverse Kunststoffe oder Naturstoffe. Filtermedien können ferner aus Fasern oder dreidimensionalen Strukturen, wie Schwämmen oder offenporigen Schäumen, bestehen. Weitere bekannte Filtermedien sind Bündel, Matten und Gewebe aus anorganischen Fasern, wie Steinwolle, Glaswolle oder Metallwollen. Bei biologischen Filtern ist die Gleichverteilung des Wassers über das gesamte Filtervolumen zur Anströmung des Filtersubstrates mit sauerstoffreichem Wasser von besonderer Bedeutung, um anaerobe Zonen im Filter zu vermeiden. In Zonen mit Sauerstoffunterversorgung besteht nämlich die Gefahr, dass Substanzen, wie Nitrit oder Schwefelwasserstoff, die Biofilmentstehung hemmen, oder sich Krankheitserreger wie Pseudomonas aeruginosa oder Legionellen vermehren. Je größer die angeströmte Oberfläche des Filtermaterials ist, desto größer ist die Menge des sich aufbauenden Biofilms pro Zeiteinheit und somit die Leistung des Filters.

Bei mechanischen Langsamfiltern, insbesondere Filtern mit Sand als Filtermedium, werden große Filterflächen benötig, welche mit einer geringen Geschwindigkeit angeströmt werden müssen. Eine ungleichmäßige Durchströmung führt wie bei biologischen Filtern auch bei mechanischen Filtern zu schlechten Filterleistungen.

Üblicherweise bestehen Filter aus mehreren Kubikmeter Filtermaterialien, welche über viele Jahre unter Freilandbedingungen gleichmäßig durchströmt werden. Eine direkte Anströmung von großflächigen Filtereinheiten kann hydraulisch, durch Erzeugen eines flächig wirkenden Druckunterschieds vor und nach dem Filtermaterial, erfolgen. Je höher der Druckunterschied, desto besser und stabiler ist die Wasserverteilung auch auf großen Flächen. Da ein hoher Druckverlust über das Filtermaterial einen erhöhten Energieaufwand bedeutet, ist man bestrebt, die Flächen, über welche Wasser verteilt werden soll, zu begrenzen. Bei Filtermaterialien mit Schüttungen besteht insbesondere auch die Gefahr einer Kanalbildung, welche hohe Druckdifferenzen, insbesondere bei feinkörnigen Schüttungen, unmöglich macht.

Alternativ kann eine hydrodynamische Wasserverteilung erfolgen, welche üblicherweise derart realisiert wird, dass Rohrleitungen mit einem gegenüber der Umgebung erhöhten oder erniedrigten Wasserdruck beaufschlagt werden. Durch Bohrungen in den Rohren mit kleinem Querschnitt wird die Wasserverteilung durchgeführt. Der Nachteil der hydrodynamischen Verteilung mit Rohren ist, dass eine konstante Druckdifferenz bereitgestellt werden muss, welche den Energiebedarf erhöht, und dass sich die kleinen Bohrungen leicht verstopfen. Nach diesem Prinzip funktionieren auch die heute üblichen Bewässerungssysteme. Mit Drainagerohren oder einem Verteilsystem, wie es beispielsweise in der EP-A-1 038 436 zur Wasseraufbereitung für Schwimmteichwasser beschrieben ist, kann eine gleichmäßige Verteilung in größeren Schüttungen über einige Zeit realisiert werden. In der Praxis zeigen sich diese Verteilsysteme jedoch empfindlich gegen Verunreinigungen, Ablagerungen, Wurzelbildungen, sodass eine langfristige wartungsfreie Funktion nicht möglich ist. Bei vertikal durchströmten Schüttungen ist zwischen Ober- und Unterseite der Schüttungen ein Druckunterschied zu erzeugen, sodass, je nach Strömungsrichtung, eine saugende oder drückende Wasserverteilung erfolgt. Bei einer Verstopfung der Schüttung ist meist die gesamte Schüttung zu entfernen, um die Verstopfung zu beheben und eine korrekte Verteilung wieder sicherzustellen.

Eine Reinigungseinrichtung in Form einer Verteileinheit wird im DE 196 34 595 A beschrieben.

Der Erfindung liegt die Aufgabe zugrunde, eine Verteileinheit der eingangs genannten Art bereitzustellen, welche dafür geeignet sein soll, mehrere Filtereinheiten unabhängig voneinander mit dem zu reinigenden Wasser zu versorgen oder gefiltertes Wasser aus den Filtereinheiten zu sammeln oder sonstige Wasser benützende Einrichtungen mit Wasser zu versorgen. Diese Verteileinheit soll nicht nur einfach in Aufbau und Handhabung, hinsichtlich Reinigung und Service, sein, sie soll gleichzeitig eine einfache optische Überwachung der Durchflussmengen für jede Filtereinheit oder Einrichtung ermöglichen und energietechnisch optimierbar sein. Für die Bewegung des Wasserstromes soll ein vergleichsweise geringer Druck genügen, sodass insbesondere mit Pumpeinheiten, wie Rohrpumpen und Hebern, welche bei großen Durchflüssen geringe Drücke von wenigen Zentimetern Wassersäule aufbauen, ein Auslangen gefunden werden kann. Auch bei stark schwankendem Zufluss soll eine Verteilung des Wasserstromes in einem vorgegebenen Verhältnis möglich sein.

Gelöst wird die gestellte Aufgabe erfindungsgemäß mit einer Verteileinheit, welche einen inneren und einen äußeren Behälter aufweist, zwischen welchen Behältern zumindest zwei oben offene Abteile gebildet sind, wobei am oberen Rand des inneren Behälters ausgebildete Einschnitte Fließverbindungen für Wasser zwischen den Abteilen und dem Inneren des inneren Behälters herstellen, und wobei jedes Abteil und der innere Behälter mit zumindest einem Anschluss für eine Rohr- oder Schlauchleitung versehen ist.

Die erfindungsgemäße Vorrichtung ist daher vorteilhafterweise sowohl für einen druckseitigen Betrieb mit einer Verteilung des Wassers vom Inneren des inneren Behälters in die Abteile und von dort zu den "Benützern", als auch für einen saugseitigen Betrieb mit einer zentralen Ableitung von Wasser, welches von den "Benützern" kommend in die Abteile und von dort in den inneren Behälter gelangt, geeignet. Die Einschnitte gewährleisten den Transport definierter Wassermengen vom inneren Behälter in die einzelnen Abteile oder aus den einzelnen Abteilen in den inneren Behälter. Auf diese Weise können bei druckseitigem Betrieb etwaig angeschlossene Filtereinheiten/"Benützer" unabhängig voneinander in einem vorgegebenen Verhältnis mit Wasser beschickt werden oder es kann Wasser aus den Filtereinheiten/"Benützern" in einem vorgegebenen Verhältnis abgezogen werden.

Bei einer bevorzugten Ausführungsform der Erfindung sind die Einschnitte am oberen Rand des inneren Behälters entweder V-förmig oder U-förmig ausgebildet, wobei die V-förmige Ausbildung bevorzugt ist. Mit V-förmigen Einschnitten lassen sich definierte Durchflussmengen besonders gut einstellen.

Im inneren Behälter kann eine Kreiselpumpe, eine Rohrpumpe oder ein Heber eingebaut sein, um, bei saugseitigem Betrieb ein Ansaugen von Wasser in den inneren Behälter und bei druckseitigem Betrieb ein Verteilen des Wassers vom inneren Behälter auf die einzelnen Benützer sicherzustellen. Dabei ist ein einziges Aggregat ausreichend.

Es gibt eine Vielzahl von Möglichkeiten, die Verteileinheit kompakt und zweckmäßig auszuführen. So ist es beispielsweise möglich, den inneren und den äußeren Behälter zylinderförmig zu gestalten und ineinander anzuordnen. Bei einer anderen Ausführungsform können der innere und der äußere Behälter als Prismen, insbesondere als reguläre Prismen, ausgeführt sein. Bei diesen und ähnlichen Ausführungsvarianten können die einzelnen Abteile durch einfache Zwischenwände zwischen innerem und äußerem Behälter gebildet werden.

Bei einer weiteren möglichen Ausführungsform der Verteileinheit ist der innere Behälter von Zwischenwänden im äußeren Behälter gebildet. Zwischen diesen Zwischenwänden und äußeren Wänden des äußeren Behälters können bei diesen Ausführungsformen ebenfalls auf einfache Weise die Abteile gebildet werden.

Sind die Einschnitte am oberen Rand des inneren Behälters übereinstimmend ausgeführt, so fließen gleiche Wassermengen durch jeden Einschnitt. Dies ist beispielsweise dann von Vorteil, wenn an die Verteileinheit mehrere übereinstimmend ausgeführten Filtereinheiten angeschlossen sind.

Wird die Verteileinheit mit unterschiedlich aufgebauten Filtereinheiten betrieben, kann es vorteilhaft sein, zumindest einige der Einschnitte mit unterschiedlichen Querschnittsflächen auszuführen. Dabei kann bei der Verteileinheit auch vorgesehen sein, dass ein Abteil oder mehrere Abteile über Einschnitte gleicher Dimensionierung mit dem inneren Behälter in Verbindung sind, während zumindest ein anderes Abteil über einen oder mehrere Einschnitte einer anderen Dimensionierung mit dem inneren Behälter in Verbindung sind.

Um Verteileinheiten variabel nutzen zu können, ist es von Vorteil, wenn die Querschnittsfläche zumindest eines Einschnittes, insbesondere sämtliche Einschnitte, in einer Verteileinheit variabel einstellbar bzw. veränderbar ist. Dazu kann eine am inneren Behälter entsprechend gelagerte Blende bei jedem dieser Einschnitte vorgesehen sein.

Soll eine schwimmende Anordnung der Verteileinheit erfolgen, kann sie mit entsprechenden Auftriebskörpern versehen werden.

Die Erfindung betrifft ferner die Verwendung der Verteileinheit gemäß der Erfindung im saugseitigen oder im druckseitigen Betrieb in einem System zur Filterung von Wasser eines Gewässers, wobei die Verteileinheit an mindestens zwei Filtereinheiten angeschlossen wird. Die erfindungsgemäße Verteileinheit lässt sich besonders vorteilhaft an unterschiedlich ausgeführte Filtereinheiten anschließen, wobei wahlweise ein saugseitiger oder ein druckseitiger Betrieb möglich sind. Besonders günstig ist die Verwendung der Verteileinheit in einem System zur Filterung von Wasser mit zumindest einer Filtereinheit aus Steinwolle, insbesondere mit mehreren Steinwolle-Filtereinheiten. So kann die Verteileinheit in einem System zur Filterung von Wasser mit mehreren Filtereinheiten aus Steinwolle, welche direkt auf die Verteileinheit aufgesteckt sind, verwendet werden. Die erfindungsgemäße Verteileinheit gestattet eine besonders gleichmäßige Durchströmung von Steinwolle, was für eine gute Filterwirkung dieses Filtermaterials wesentlich ist.

Bei einer Alternative der Erfindung wird die Verteileinheit in einem System zur Filterung von Wasser mit Filtereinheiten, welche Segmente eines langsam durchströmten Sandfilters sind, eingesetzt. Die Verteileinheit kann eine besonders gleichmäßige Durchströmung der gesamten Filterfläche gewährleisten, was bei Sandfiltern eine Voraussetzung für eine wirksame Filtration ist. Bei dieser Verwendung der erfindungsgemäßen Filtereinheit lässt sich eine sehr gute Reinigungsleistung mit Filtersand einer Schütthöhe von wenigen Zentimetern erzielen.

Die erfindungsgemäße Verteileinheit lässt sich auch vorteilhaft in einem System zur Filterung von Wasser mit zumindest einer Filtereinheit, welche eine oder mehrere Schichten aus geschütteten Filtermaterialien, wie Zeolith, Kies, Blähton und dergleichen, enthält, einsetzen. Dabei werden diese Filtereinheiten bevorzugt von oben nach unten durchströmt, wobei die erfindungsgemäße Verteileinheit auch eine Beschickung mit mehreren Kubikmeter Wasser pro Stunde gestattet.

Auch Schwebebettfilter können mit einer erfindungsgemäßen Verteileinheit vorteilhaft mit Wasser beschickt werden und zur Reinigung eines Gewässers eingesetzt werden. Schwebebettfilter werden von unten nach oben durchströmt.

Des Weiteren ist die Verwendung der erfindungsgemäßen Verteileinheit in einem System zur Filterung von Wasser mit Filtereinheiten unterschiedlicher Bauart ohne weiteres möglich. Eine entsprechende Dimensionierung der Einschnitte gestattet dabei eine dem jeweiligen Filtermaterial gerecht werdende Beschickung mit Wasser.

Die Erfindung betrifft ferner ein System zur Filterung eines Gewässers mit mindestens zwei Filtereinheiten und mit zumindest einer Verteileinheit, welche erfindungsgemäß ausgeführt ist. Bei einer bevorzugten Ausführungsform dieses Systems sind mehrere Filtereinheiten mittels dazwischen angeordneten Verteileinheiten vorgesehen.

Weitere Merkmale, Vorteile und Einzelheiten der Erfindung werden nun anhand der Zeichnung, die Ausführungsbeispiele der Erfindung darstellt, näher beschrieben. Dabei zeigen
Fig. 1 eine Ansicht einer ersten Ausführungsvariante einer erfindungsgemäßen Verteileinheit,
Fig. 2 einen mittigen Längsschnitt durch die Verteileinheit aus Fig. 1, adaptiert für saugseitigen Betrieb,
Fig. 3 einen Längsschnitt durch die Verteileinheit aus Fig. 1, adaptiert für druckseitigen Betrieb,
Fig. 4 einen Längsschnitt durch die Verteileinheit aus Fig. 1 mit einer Variante für druckseitigen Betrieb,
Fig. 5a bis 5c Ansichten einer Einrichtung zur Begrenzung bzw. Einstellung der Wasserdurchflussmenge der Verteileinheit,
Fig. 6a und 6b und Fig. 7 und 8 jeweils Ansichten von weiteren Ausführungsvarianten von Verteileinheiten gemäß der Erfindung,
Fig. 9 ebenfalls eine Ansicht einer Ausführungsvariante einer erfindungsgemäßen Verteileinheit,
Fig. 10 ein Schema einer Variante eines Anschlusses einer erfindungsgemäßen Verteileinheit mit druckseitigem oder saugseitigem Betrieb an Filtereinheiten aus geschütteten Filtermaterialien,
Fig. 11 ein Schema einer Variante eines Anschlusses einer Verteileinheit mit saugseitigem Betrieb an Filtereinheiten aus Steinwolle,
Fig. 12 und 13 Ansichten eines Schemas einer an Filtereinheiten angeschlossenen Verteileinheit mit einer "spindelförmigen" Anordnung,
Fig. 14 ein Schema einer an zwei als Schwebebettfilter ausgeführten Filtereinheiten angeschlossenen Verteileinheit,
Fig. 15 ein Schema einer an zwei als Schwebebettfilter ausgeführten Filtereinheiten angeschlossenen Verteileinheit, welche von drei Pumpenskimmern beschickt ist,
Fig. 16a und 16b eine Ausführungsvariante einer Filtereinheit aus geschüttetem Filtermaterial und
Fig. 17 eine Ausführungsvariante einer in mehrere Filtereinheiten geteilten Filteranordnung.

Die Verteil-bzw. Sammeleinheit gemäß der Erfindung wird nachfolgend nur als Verteileinheit bezeichnet besteht grundsätzlich aus einem inneren Behälter 1 und einem äußeren Behälter 4, zwischen welchen durch Zwischenwände 6 voneinander getrennte Abteile 8 gebildet sind. Beide Behälter 1, 4 stehen im Betrieb aufrecht bzw. vertikal, sind oben offen und weisen einen insbesondere für beide Behälter 1, 4 gemeinsamen und bis auf zumindest einen Rohr- oder Schlauchanschluss 2 geschlossenen Boden 7 auf.

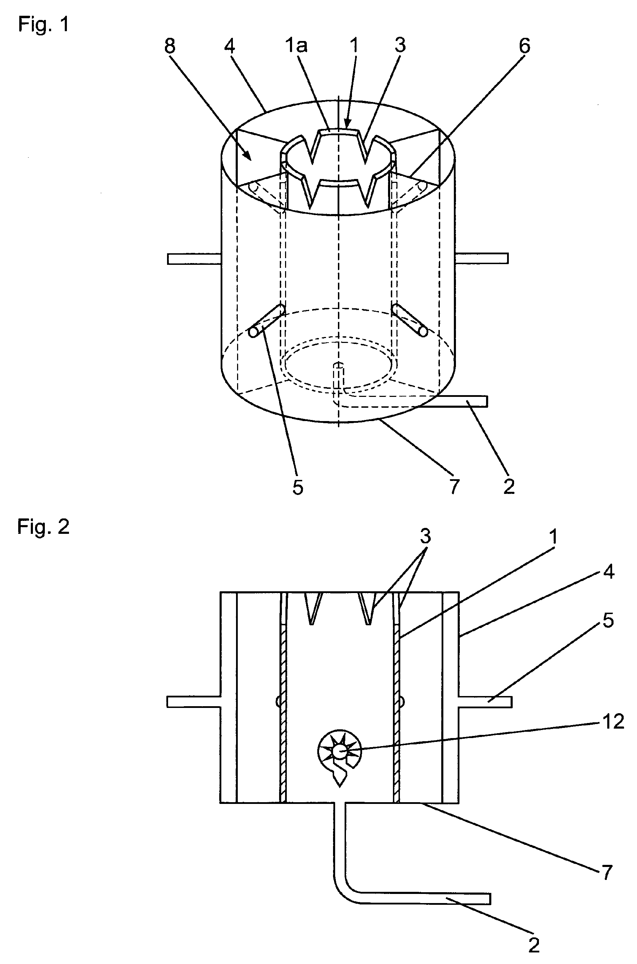

Bei der in Fig. 1 gezeigten Ausführungsform sind der innere Behälter 1 und der äußere Behälter 4 als konzentrisch zueinander angeordnete und oben offene Zylinder übereinstimmender Höhe mit einem gemeinsamen, geschlossenen Boden 7 ausgeführt. Durch senkrecht und radial verlaufende Zwischenwände 6 zwischen dem inneren und äußeren Behälter 1 und 4 erfolgt eine Teilung des Zwischenraumes zwischen den beiden Behältern 1 und 4 bei der gezeigten Ausführungsform sechs gleich große Abteile 8. Der umlaufende obere Rand 1a des inneren Behälters 1 ist bei jedem Abteil 8 mit zumindest einem V-förmigen Einschnitt 3 versehen. Bei der in Fig. 1 gezeigten Ausführungsform sind sämtliche Einschnitte 3 gleich dimensioniert und daher auch gleich tief ausgeführt. Bei einer derartigen Ausführung der Einschnitte 3 fließen gleiche Wassermengen durch jeden Einschnitt 3, entweder von den Abteilen 8 in den inneren Behälter 1 oder vom inneren Behälter 1 in die Abteile 8, wie noch beschrieben wird. Die Einschnitte 3 können jedoch auch unterschiedlich groß ausgeführt sein, um unterschiedliche Durchflussverhältnisse zu realisieren, beispielsweise durch eine flache oder eine steilere Winkelung der V-Form. Es ist ferner grundsätzlich möglich, die Einschnitte 3 in gerundeter V-Form oder in U-Form auszubilden. Am Anschluss 2 im Boden 7 des inneren Behälters 1 wird eine Rohr- bzw. Schlauchleitung angesetzt, die entweder einen Zufluss oder einen Abfluss von Wasser gestattet. Anstelle eines, wie dargestellt, einzigen Anschlusses 2 können im Boden 7 des inneren Behälters 1 auch mehrere Anschlüsse vorgesehen sein, beispielsweise wenn mehrere Pumpenskimmer die Oberfläche eines Gewässers absaugen und der Verteileinheit zuführen. An der Wand des äußeren Behälters 4 ist bei jedem Abteil 8 ein Anschluss für eine Rohr- bzw. Schlauchleitung vorgesehen, welche das jeweilige Abteil 8 mit einem in Fig. 1 nicht gezeigten "Verbraucher", insbesondere einer Filtereinheit verbindet, wie noch beschrieben wird. Bei der in Fig. 1 gezeigten Ausführungsform sind die Anschlüsse 5 für die Rohr- bzw. Schlauchleitungen in gleicher Höhe vom Boden 7 angeordnet.

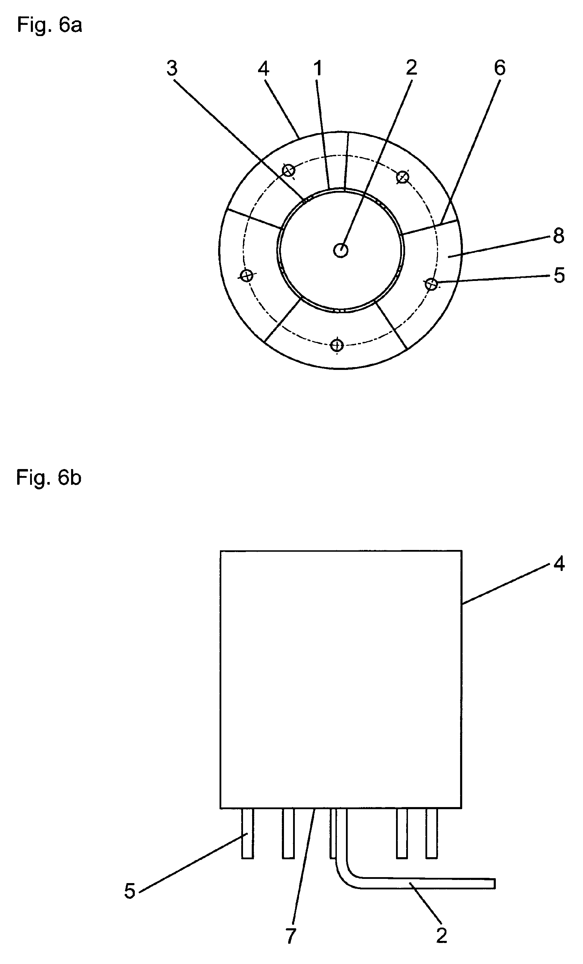

Die zu jedem Abteil 8 vorgesehenen Anschlüsse 5 für die Rohr- bzw. Schlauchleitungen können, wie es Fig. 6a (in Draufsicht) und 6b (in Seitenansicht) zeigen, auch am Boden 7 angeordnet sein. Ansonsten entspricht die in Fig. 6a und 6b gezeigte Ausführungsvariante jener gemäß Fig. 1, mit dem Unterschied, dass fünf Zwischenwände 6 vorgesehen sind, welche den Raum zwischen dem inneren Behälter 1 und dem äußeren Behälter 4 in fünf gleich große Abteile 8 teilt.

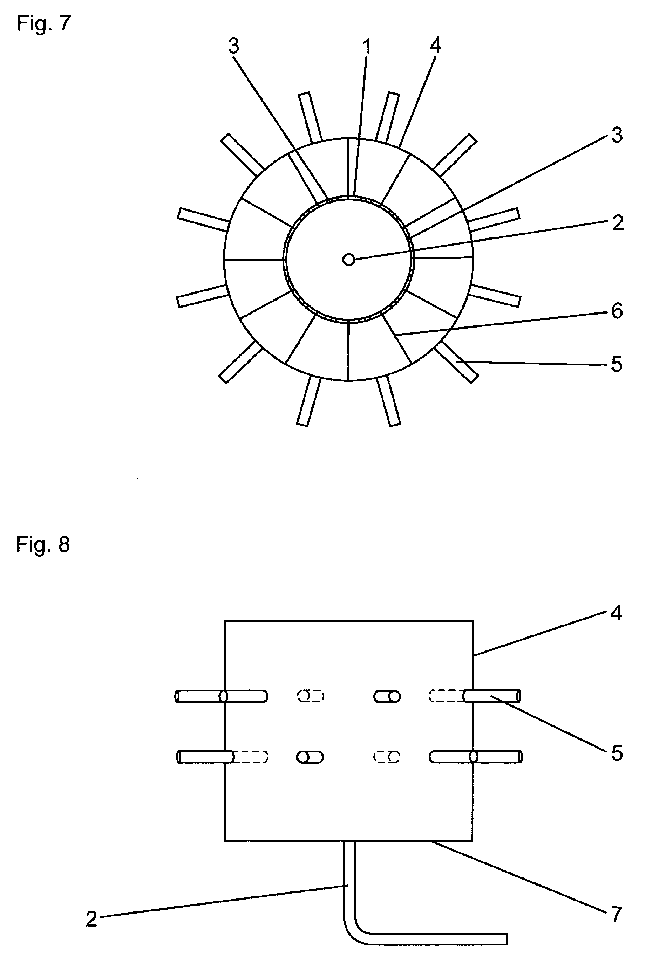

Die in Fig. 7 (Draufsicht) und 8 (Seitenansicht) gezeigte Ausführungsvariante einer Verteileinheit weist zwölf gleich große Abteile 8 auf. Die Anschlüsse 5 für die Rohr- bzw. Schlauchleitungen befinden sich in gleichen Abständen vom Boden 7.

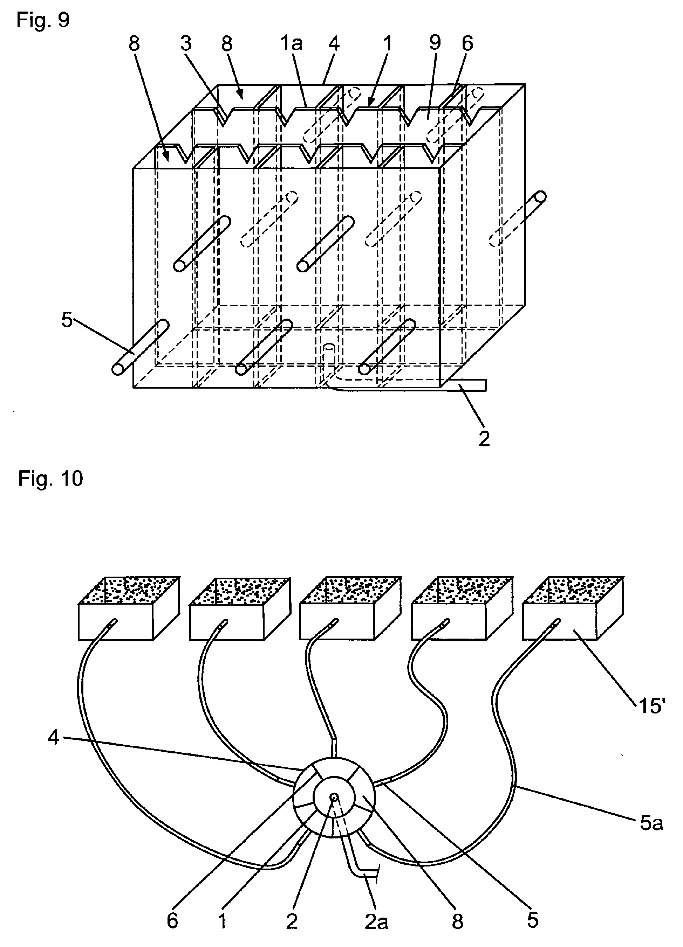

Fig. 9 zeigt eine Ausführungsvariante einer Verteileinheit mit einem quaderförmigen äußeren Behälter 4. Der oben offene Behälter 4 weist im Inneren zwei parallel zu den größeren Seitenwänden verlaufende Trennwände 9 auf, welche den inneren Behälter 1 mitbilden. Bei der gezeigten Ausführungsform besitzen die beiden Trennwände 9 gleich große Abstände zu den ihnen benachbarten Seitenwänden des äußeren Behälters 4. Zu den Trennwänden 9 senkrecht verlaufende Zwischenwände 6 teilen die beiden Zwischenräume zwischen den Trennwänden 9 und den Seitenwänden des äußeren Behälters 4 jeweils in fünf gleich große Abteile 8. An den oberen Rändern 1a der Trennwände 9 sind zu jedem Abteil 8 gehörende V-förmige Einschnitte 3 ausgebildet. Mittels an den äußeren Behälterwänden vorgesehenen Anschlüssen 5 kann jedes Abteil 8 mittels einer Rohr- bzw. Schlauchleitung mit einem "Benützer", beispielsweise einer Filtereinheit, verbunden werden. Die Anschlüsse 5 sind bei der in Fig. 10 gezeigten Ausführungsform in unterschiedlichen Höhen angeordnet. Am Boden 7 ist ebenfalls ein Anschluss 2 für eine Rohr- bzw. Schlauchleitung vorgesehen, wobei mehrere Anschlüsse für mehrere Rohr- bzw. Schlauchleitungen vorgesehen sein können.

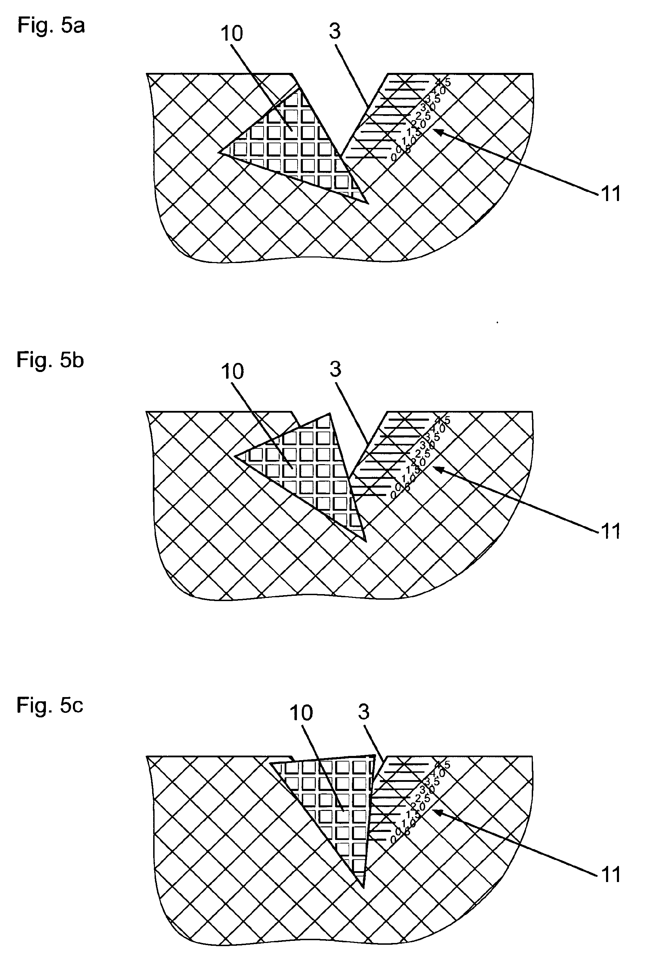

Fig. 5a bis 5c zeigen schematisch eine Möglichkeit, durch eine Blende 10 den Querschnitt des V-förmigen Einschnittes 3 zu verändern. Bei der gezeigten Ausführungsform ist die Blende 10 ein Plättchen, beispielsweise in Dreieckform, welches an der Behälterwand verstellbar gelagert ist. Eine Skala 11, welche neben dem Einschnitt 3 auf der Behälterwand aufgebracht ist, gestattet ein Einstellen und Ablesen des Durchflusses. Nachdem die Steighöhe des Wassers im Einschnitt 3 bei gegebener Form des Einschnittes 3 dem Durchfluss proportional ist, kann die Skala 11 den Durchfluss in m³/h anzeigen. Fig. 5b und 5c zeigen Stellungen der Blende 10 mit verringerter Durchflussmenge. Die Blende 10 wird ferner gegenüber der Behälterwand in geeigneter Weise abgedichtet. Soll der Durchfluss bei einem durch eine Blende 10 reduzierten Querschnitt gemessen werden, so kann die Skala bei bekanntem Winkel der Blende mit einer Tabelle, einem Nomogramm oder einer Berechnungsformel zur Ermittlung des aktuellen Durchflusses transformiert werden.

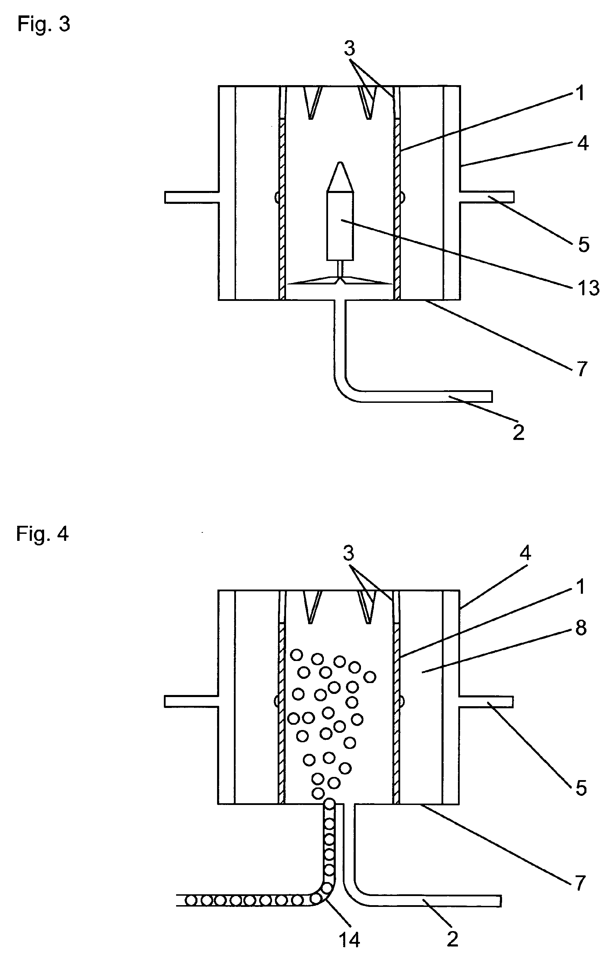

Erfindungsgemäße Verteileinheiten können sowohl saugseitig als auch druckseitig betrieben werden. Für einen saugseitigen Betrieb ausgestattete Verteileinheiten sind beispielsweise in Fig. 2 und Fig. 3 gezeigt. Die in diesen Figuren gezeigten Verteileinheiten sind beispielhaft gemäß Fig. 1 ausgeführt, ihre Bestandteile sind entsprechend mit Bezugsziffern versehen. Die Verteileinheit wird im System "Gewässer" derart positioniert, dass das Wasser in den Abteilen 8 derart hoch steht, dass die V-förmigen Einschnitte 3 zum Teil unter dem Wasserspiegel des Gewässers stehen. Der Rand des äußeren Behälters 4 und die oberen Endabschnitte der Zwischenwände 6 zwischen den einzelnen Abteilen 8 befinden sich oberhalb des Wasserspiegels. Im inneren Behälter 1 wird der Wasserspiegel gegenüber jenem in den Abteilungen 8 erniedrigt. Dies kann, wie es beispielsweise in Fig. 2 gezeigt ist, mittels einer im unteren Bereich des inneren Behälters 1 positionierten Pumpe 12, beispielsweise einer Kreiselpumpe, erfolgen, welche das Wasser aus dem inneren Behälter 1 über den Anschluss 2 in eine Rohr- bzw. Schlauchleitung pumpt. Fig. 3 zeigt eine Ausführung mit einer im unteren Bereich des inneren Behälters 1 positionierten Rohrpumpe 13. Alternativ kann der Wasserspiegel im inneren Behälter 1 durch den an der am Anschluss 2 angekoppelten am Rohr- bzw. Schlauchleitung wirkenden Sog einer externen Pumpe oder eines externen Hebers oder auch durch ein freies Auslaufen der Rohr- bzw. Schlauchleitung in ein tiefer als das Gewässer gelegenes Becken oder dergleichen abgesenkt werden. Über die V-förmigen Einschnitte 3 fließt das Wasser zu gleichen oder zu definierten Anteilen aus den Abteilen 8 in das Innere des Behälters 1 und von dort in die Rohr- bzw. Schlauchleitung. Für eine optimale Positionierung der Verteileinheit im Gewässer, insbesondere bei schwankendem Wasserstand, kann die Verteileinheit mittels Auftriebskörper schwimmend ausgeführt werden.

Für einen druckseitigen Betrieb wird die Verteileinheit im System "Gewässer" derart positioniert, dass sich die V-förmigen Einschnitte 3 zur Gänze oberhalb des Wasserspiegels des Gewässers befinden. Dabei kann die Verteileinheit in beliebiger Höhe über dem Wasserspiegel angebracht werden. Je höher die Verteileinheit über dem Wasserspiegel positioniert wird, desto höher ist der Druckaufbau bzw. der Wasserdruck nach der Verteilung. Durch die jeweilige Positionierung kann der für den jeweiligen Benützer-Filtersysteme, Quellsteine, Fontänen, Wasserspiele - benötigte Wasserdruck unabhängig von der Durchflussmenge gut eingestellt werden. Eine externe Vorrichtung, wie eine Pumpe, eine archimedische Schraube oder ein Heber, sorgen dafür, dass über die an den Anschluss 2 gekoppelte Rohr- bzw. Schlauchleitung Wasser mit Druck in das Innere des Behälters 1 geleitet wird und dieser ständig gefüllt ist. Während ein Heber nur vergleichsweise geringen Druck aufbauen kann, kann mit einer Pumpe eine beliebige Förderhöhe erreicht werden. Der erforderliche Wasserdruck kann alternativ auch durch ein Zuführen von Wasser aus einem höher gelegenen Behälter oder Becken aufgebaut werden. Über die V-förmigen Einschnitte 3 fließt das zugeführte Wasser zu gleichen oder zu definierten Anteilen in die Abteile 8 und von dort durch Rohr- bzw. Schlauchleitungen zu den versorgenden "Benützern", beispielsweise den Filtereinheiten. Alternativ zu externen Vorrichtungen kann zum Füllen des inneren Behälters 1 auch beim druckseitigen Betrieb eine Pumpe bzw. Rohrpumpe 12 im unteren Bereich des Inneren des Behälters 1 positioniert werden, welche das Wasser aus der am Anschluss 2 angekoppelten Rohr- bzw. Schlauchleitung ansaugt. Alternativ kann ein externer Heber in den unteren Bereich des inneren Behälters 1 über eine gesonderte Zuleitung 14, wie es in Fig. 4 gezeigt ist, Druckluft einbringen und derart die Förderung von Wasser aus der Rohr- bzw. Schlauchleitung bewirken.

Erfindungsgemäß ausgeführte Verteileinheiten werden insbesondere in Systemen zur Filterung von Gewässern, insbesondere des Wassers eines Schwimmteiches oder Biotops, verwendet. Mit einer erfindungsgemäßen Verteileinheit können mehrere Filtereinheiten mittels nur einer Fördereinrichtung, beispielsweise einer Pumpe, mit Wasser versorgt werden. Diese Filtereinheiten sind von ihrem Volumen und/oder ihrer Fläche derart ausgelegt, dass durch Ansaugen oder Beschicken von Wasser eine optimale Filterwirkung erzielbar ist.

Erfindungsgemäße Verteileinheiten können ferner in Kaskaden angeordnet werden, um eine Vielzahl von Anschlüssen zur Verfügung zu haben. So kann beispielsweise eine Verteileinheit, welche sechs Anschlüsse bietet, über alle oder einen Teil der Rohr- bzw. Schlauchleitungsanschlüsse wiederum an eine Verteileinheit angeschlossen werden. So kann man beispielsweise mit Verteileinheiten mit sechs Anschlüssen unter Verwendung von sieben baugleichen Einheiten bis zu sechsunddreißig Anschlüsse zu sechsunddreißig Filtereinheiten zur Verfügung stellen.

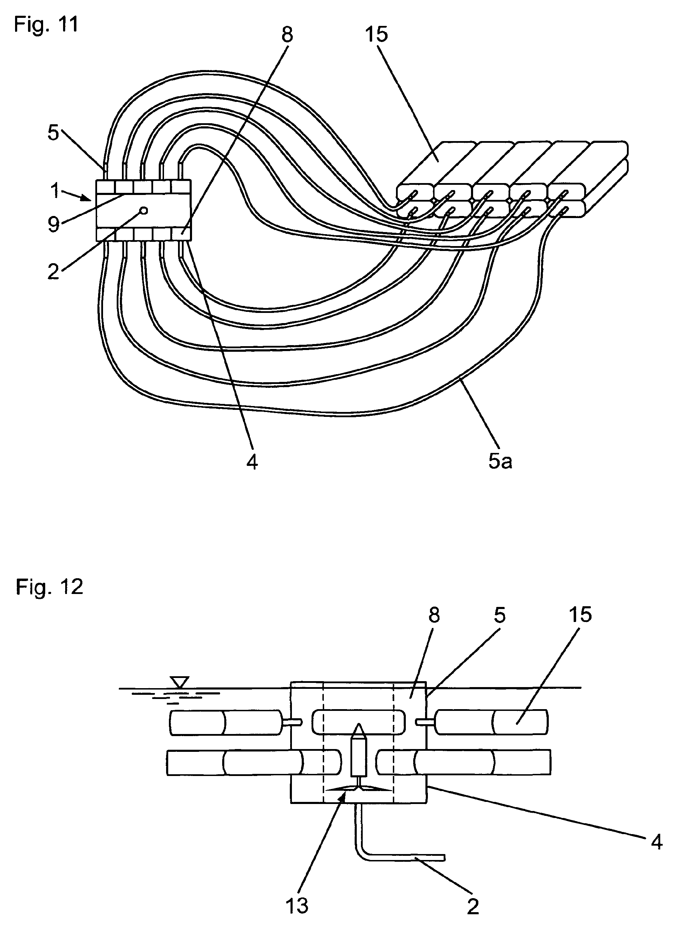

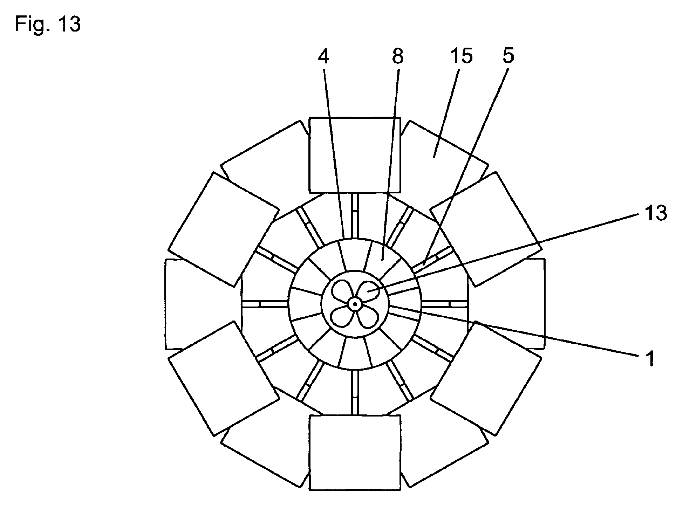

Fig. 11 sowie Fig. 12 und Fig. 13 zeigen jeweils ein Schema einer Anordnung einer Verteileinheit mit Filtereinheiten 15 aus Steinwolle. Steinwolle bietet wegen ihrer großen Oberfläche und ihrem sehr günstigen Verhältnis von Oberfläche zu Volumen grundsätzlich eine gute Filterleistung. Um diese zu nutzen, ist eine gleichmäßige Durchströmung der Steinwolle erforderlich. Die Filtereinheiten 15 bestehen bei einer bevorzugten Ausführung jeweils aus einem massiven Steinwolleblock, welcher außen durch ein grobmaschiges Gewebe oder dergleichen umgeben bzw. ummantelt ist. In den Block ist ein über seine Länge mehrfach geschlitztes oder auf sonstige Weise perforiertes Rohr eingebracht, welches an eine der Rohr- bzw. Schlauchleitungen 5a angeschlossen wird. Die Filtereinheiten 15 können grundsätzlich an beliebigen Stellen im Gewässer verteilt sein und sind über die Rohr- bzw. Schlauchleitungen 5a mit der Verteileinheit verbunden. Fig. 11 zeigt eine einfache Anordnung mit einer gemäß Fig. 9 ausgeführten Verteileinheit und mit in zwei aufeinanderliegenden Reihen von Filtereinheiten 15. Die in Fig. 12 und 13 gezeigte Ausführung als "schwimmende Filterspindel" kann besonders einfach in jedes Gewässer bzw. jeden Teich eingebaut werden. Die Verteileinheit ist beispielsweise analog zur Verteileinheit gemäß Fig. 7, 8 und Fig. 3 ausgeführt und für saugseitigen Betrieb ausgelegt. Die Steinwolle-Filtereinheiten 15 sind direkt an die Anschlüsse 5 der freischwimmend ausgeführten Verteileinheit angeschlossen. Vorzugsweise werden dabei Steckverbindungen genutzt, die einen schnellen Austausch etwaiger verstopfter Filtereinheiten 15 ermöglichen. Wie gezeigt beinhaltet die Verteileinheit vorzugsweise bereits eine Rohrpumpe 13 oder einen Heber, sodass für den Betrieb nur eine Kabelverbindung für die Stromversorgung, vorzugsweise 12 Volt, um bei Bedarf einen gleichzeitigen Badebetrieb zu ermöglichen, vorzusehen ist. Bei einer weiteren erfindungsgemäßen Variante kann ein Betrieb der Verteileinheit mit Solarenergie, mit Fotovoltaik-Zellen, welche den Strom zum Betrieb der Rohrpumpe 13 liefern, vorgesehen sein.

Fig. 10 zeigt ein Schema einer Anordnung einer Verteileinheit, die analog Fig. 1 ausgeführt ist, mit mehreren Filtereinheiten 15', die geschüttete Filter sind. Die Verteileinheit sorgt hier beispielhaft für einen druckseitigen, alternativ auch für einen saugseitigen Betrieb. Um eine langfristig gleichmäßige Durchströmung der einzelnen Filtereinheiten 15' zu gewährleisten, sollten diese nicht zu groß dimensioniert sein. Die Anordnung der Filtereinheiten 15' ist frei wählbar, bevorzugt ist jedoch eine Anordnung der Filtereinheiten 15' unmittelbar nebeneinander.

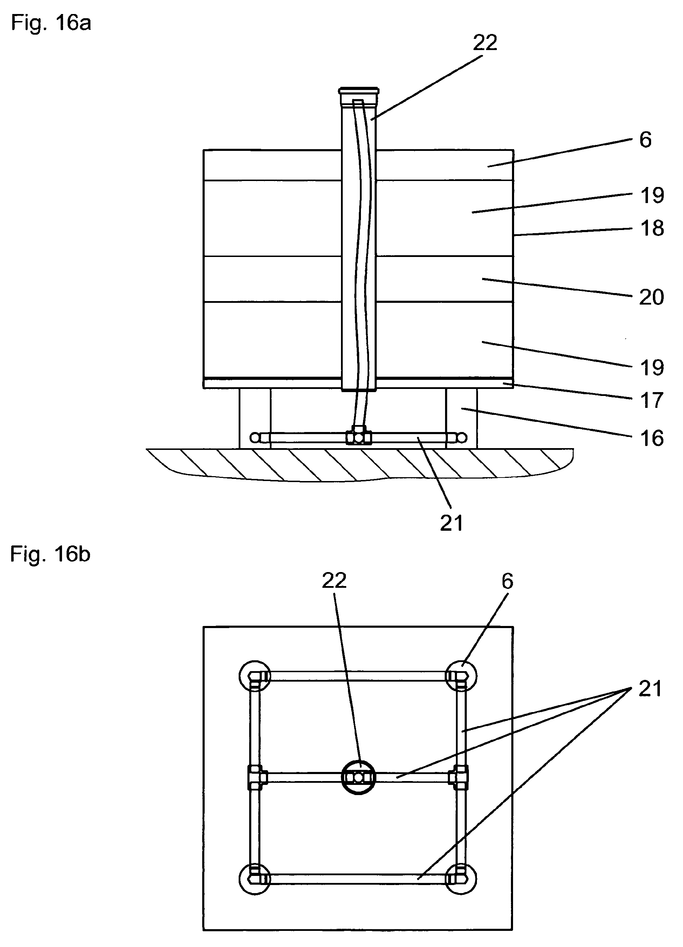

Eine Filtereinheit 15' mit geschütteten Filtermaterialien ist in Fig. 16a und 16b dargestellt. In einem quaderförmigen Aufnahmebehälter 18 befindet sich ein von Füßen 16 getragenes Gitter 17. Auf das Gitter 17 ist eine Schicht einer Schüttung aus phosphorarmen Dolomitkies oder -bruch 19 aufgebracht. Auf die Schicht auf Dolomitkies oder -bruch 19 ist eine Schicht aus künstlichem oder natürlichem Zeolith 20 mit etwa gleicher Korngröße wie die Schüttung aus Dolomitkies oder -bruch 19 eingebracht. Die Schicht aus Zeolith 20 ist mit einer weiteren Schicht aus Dolomitkies oder -bruch 19 überdeckt. Eine einheitliche Korngröße von Dolomitkies 19 und Zeolith 20 ist vorteilhaft, wenn die Filtereinheiten 15' nicht zu groß sein sollen, sodass kein hoher Druck für die Wasserverteilung erforderlich ist und der Wasserdurchfluss hoch genug sein kann, um eine gute Wasserverteilung zu garantieren. Dies kann mit Hilfe einer erfindungsgemäßen Verteileinheit durch die Aufteilung einer üblicherweise großen Filterzone in mehrere "Teilfilter" erreicht werden. Ein weiterer Vorteil der einheitlichen Korngröße ist, dass eine Reinigung des Filtersubstrates mit Druckluft, welche beispielsweise von einem nicht gezeigten Verdichter über Verteilleitungen 21 unter dem Gitter 17 eingebracht werden kann, möglich ist, ohne dass dabei der Aufbau und die Funktion der Filterschüttung gefährdet sind. Bei einer bevorzugten, insbesondere in Fig. 16b gezeigten Ausführung, werden gelochte Verteilleitungen 21 auf den Stellfüßen 16, welche das Gitter 17 tragen, befestigt. Die bevorzugte Durchströmung der Schüttung erfolgt von oben nach unten. Diese Maßnahme ermöglicht hohe Beschickungen von mehreren m³/h an Wasser pro m² Filter ohne die Filterschüttung zu schädigen. Ein Wartungsschacht 22 beherbergt die Druckluftzuleitung und wird beim Service benutzt, um Sediment, welches sich unter dem Gitter 17 mit der Zeit ansammelt, abzusaugen, ohne dabei die Filterschüttung entnehmen zu müssen.

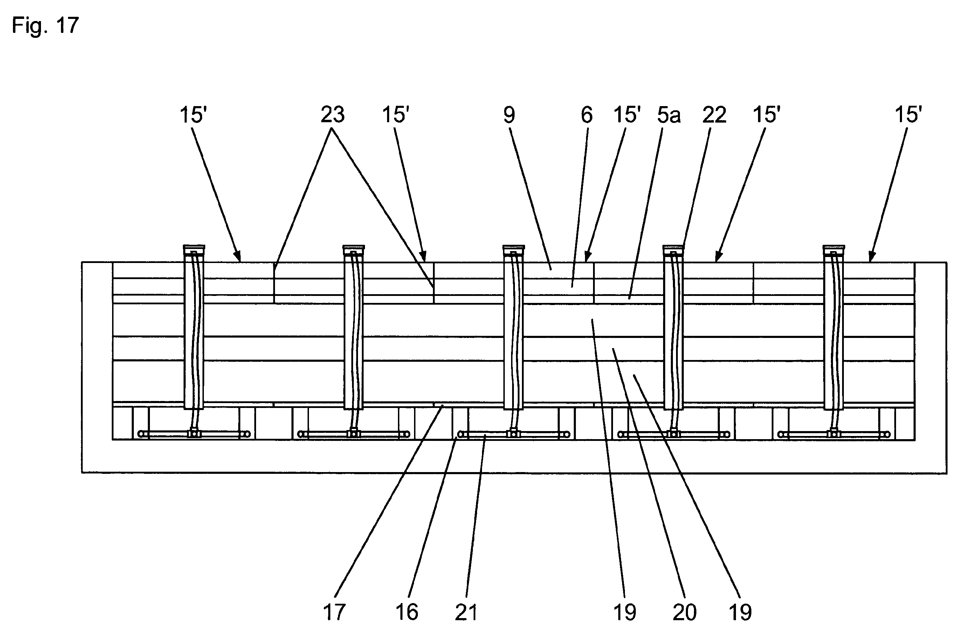

Eine bevorzugte Ausführung der Verwendung von Filtereinheiten 15' aus geschütteten Filtermaterialien zeigt Fig. 17. Die fünf Filtereinheiten 15' sind Segmente eines großflächigen Filters und sind durch Abtrennungen 23 voneinander separiert, welche eine unabhängige Überstauung der einzelnen Filtereinheiten 15' ermöglichen. Unterschiede in der Durchströmbarkeit der Filtereinheiten 15', welche mit der Zeit durch Verunreinigungen, Biofilmaufbau oder Wurzelwachstum entstehen können, sind optisch, durch den Vergleich der Überstauungshöhen der Filtereinheiten 15' feststellbar und können somit gezielt behoben werden.

Auch bei der Beschickung von Filtereinheiten mit Sandfiltern zur Langsamfiltration lassen sich erfindungsgemäße Verteileinheiten vorteilhaft einsetzen. Sandfilter zur Langsamfiltration bestehen üblicherweise aus großen Flächen feiner Materialien bzw. feinen Sandes, welcher mit einer geringen Geschwindigkeit durchströmt wird. Solche Langsamfilter werden sowohl in der Trinkwasseraufbereitung als auch in vielen Wasseraufbereitungssystemen für Badegewässer eingesetzt. Auch bei diesen Filtern ist eine gleichmäßige Durchströmung der gesamten Filterfläche eine Voraussetzung für eine wirksame Filtration. Je gleichmäßiger die Anströmung der Oberfläche durchgeführt werden kann, desto feiner kann das Material sein und desto geringer kann die Schütthöhe gewählt werden. Üblicherweise werden nach dem Stand der Technik Langsamfilter für Schwimmteiche mit Schütthöhen von etwa einem Meter empfohlen, bei der Verwendung erfindungsgemäßer Verteileinheiten und geeigneter Substratwahl lässt sich die gleiche Reinigungsleistung mit Schüttungen von wenigen Zentimetern Höhe erreichen. Es wird daher weniger Filtermaterial benötigt und das Filtermaterial kann leichter gewartet oder getauscht werden. Bei einer bevorzugten Ausführung ist vorgesehen, den Filtersand in etwa 1 m² großen Feldern einzubringen, welche durch geeignete Abtrennungen unabhängig voneinander überstaut werden können. Die bevorzugte Schütthöhe beträgt zwischen 5 cm und 20 cm. Jedes dieser Felder bildet eine Filtereinheit und wird durch eine Schlauch- bzw. Rohrleitung oder alternativ durch eine Rinne mit einem Abteil 8 einer erfindungsgemäßen Verteileinheit verbunden.

Bei einer Ausführungsform der Erfindung kann ein Sandfilter auch auf ein geschüttetes Filter gemäß Fig. 16a und Fig. 17 aufgebracht werden. In Fig. 16a und Fig. 17 ist die Sandfilterschicht mit 24 bezeichnet. Da die Wasserverteilung durch eine getrennte Beschickung von kleinen Feldern dieser feinsten Filterschicht erfolgt, werden die darunter liegenden Schichten aus geschüttetem Material auch gleichmäßig durchströmt ohne dass eine durchgehende Trennung der Schichten aus gröberem Filtermaterial erforderlich ist. Dies vereinfacht den Aufbau und kombiniert die biologische Reinigung eines Zeolithfilters mit der mechanischen Filtration eines Sandfilters.

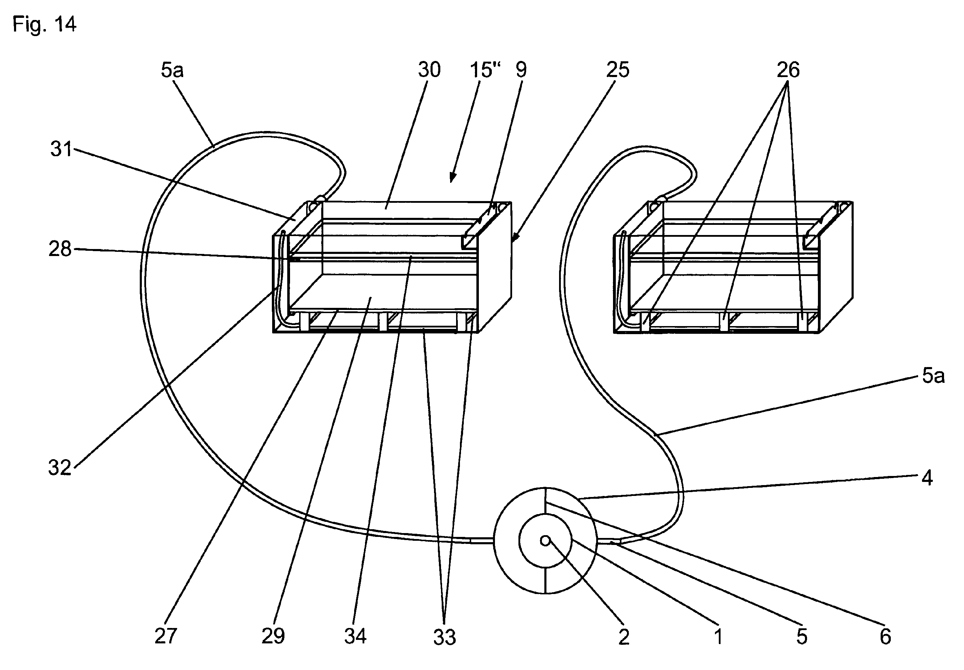

Filtersubstrate, welche leichter als Wasser sind, werden bevorzugt von unten nach oben durchströmt, weil in dieser Richtung das Filterbett stabil ist. Derartige Filtereinheiten 15" sind beispielsweise Schwebebettfilter, wie sie in Fig. 14 gezeigt sind. Zur Reinigung eines Gewässers werden mehrere Filtereinheiten 15" verwendet, die von einer gemäß der Erfindung ausgeführten Verteileinheit mit Wasser beschickt werden. Schwebebettfilter sind meist in Behälter 25 eingebaut, welche keine großen Dimensionen aufweisen. Das Schwebebettfilter weist Stellfüße 26 auf, auf welchen ein Gitter 27 liegt. Ein zweites, vom Behälter 25 gehaltenes Gitter 28 verhindert, dass das schwimmende Substrat, welches sich im von unten nach oben durchströmten Filterraum 29 befindet, aufschwimmt. Auf dem oberen Gitter 28 befindet sich eine Sandschicht 34 zur Feinfiltration. Der darüber befindliche Raum 30 fasst überstehendes Wasser. Dieser Raum 30 und der Filtersand können optional mit Sumpfpflanzen bepflanzt werden. Im oberen Bereich des Behälters 25 befindet sich in einer Einlaufkammer 31 der Anschluss an die Rohr- bzw. Schlauchleitung 5a zur Verteileinheit. In die Einlaufkammer 31 ist ein Druckluftschlauch 32 eingebracht, welcher perforierte Druckluftverteilungsleitungen 33 mit Druckluft beschicken kann. Über die Einlaufkammer 31 kann ferner Sediment, welches sich unter dem unteren Gitter 27 mit der Zeit sammelt, abgesaugt werden.

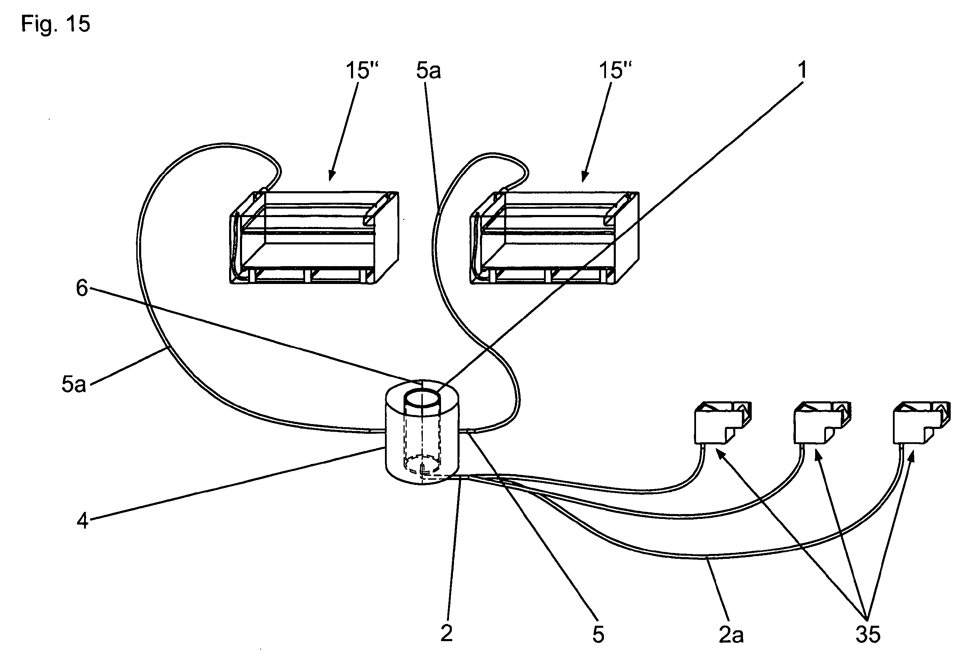

Fig. 15 zeigt ein Schema eines Systems mit einer Verteileinheit und zwei als Schwebebettfilter ausgeführten Filtereinheiten 15", wie in Fig. 14 dargestellt, und mit drei Pumpenskimmern 35, welche Oberflächenwasser ansaugen und dem inneren Behälter 1 der Verteileinheit zuführen.

Es können mehrere unterschiedlich ausgeführte Filtereinheiten mit unterschiedlichen Anströmmengen an Wasser miteinander in Kombination verwendet werden. So kann beispielsweise für einen Schwimmteich, in dem hohe Ansprüche bezüglich der Stabilität der Wasserreinigung gestellt werden, eine Kombination aus fünf Steinwollefiltern mit drei Sandfiltern zur Langsamfiltration, ferner mit zwei geschütteten Filtern und einem Schwebebettfilter vorgesehen werden. Jedes dieser unterschiedlichen Filtersysteme bzw. jede Filtereinheit zeigt verschiedene Eigenschaften bei der Wasseraufbereitung. Sandfilter zur mechanischen Langsamfiltration werden mit einer geringen Wassermenge pro Quadratmeter Fläche beschickt. Filtereinheiten mit biologischer Filtration über Zeolith, welche eine verbesserte Stickstoffversorgung für den Biofilmaufbau sicherstellen, werden mit einer mittleren Wassermenge beschickt und Schwebebettfilter werden mit einer eher hohen Wassermenge beschickt. Um Belastungsspitzen abzufangen, können zusätzlich austauschbare Steinwollefilter verwendet werden. Wollte man bislang die verschiedenen Eigenschaften der einzelnen unterschiedlichen Filtersysteme in einer Anlage nutzen, so war man darauf angewiesen, mehrere Pumpsysteme einzusetzen. Mit dem Einsatz erfindungsgemäßer Verteileinheiten lässt sich die Anzahl der Pumpen verringern, somit sind auch die Investitionen und der Wartungsaufwand geringer. Ein einziges, energiesparendes Pumpwerk mit hoher Förderkapazität ermöglicht es auf einfache Weise, die optimale Kombination zur Aufbereitung von Wasser zur Verfügung zu stellen.

Des Weiteren kann vorgesehen sein, einzelne Anschlüsse der Verteileinheiten mit Absperrmöglichkeiten, auch auf automatisierbare Weise, zu versehen. Die Option einer Steuerung ist insbesondere dann interessant, wenn infolge unterschiedlicher Belastungen des Gewässers unterschiedliche Aufbereitungsschritte vorteilhaft sind bzw. erfolgen sollen.

Eine weitere erfindungsgemäße Anwendung liegt in der Kombination von biologischen Filtereinheiten, wie Filtereinheiten mit geschütteten Materialien, mit Sandfiltern zur Langsamfiltration, welche nacheinander beschickt werden. Die ideale Filterleistung von Langsamfiltern liegt üblicherweise unter 1 m³/h, die biologischen Filter sollen hohe Filterleistungen aufweisen, um einen schnellen Biofilmaufbau zu gewährleisten. Möchte man nun einen Wasserstrom nutzen, um beide Filtertypen zu beschicken, so muss die Fläche des Langsamfilters um ein Vielfaches größer sein als die Fläche des biologischen Filters. Eine Neuverteilung des Wassers nach der Passage des einen Filtersystems, unabhängig davon, welches zuerst angeströmt wird, ist unumgänglich für eine optimale Filterfunktion. Der erste Filter, welcher über eine erfindungsgemäße Verteileinheit gleichmäßig mit Wasser beschickt wird, wird derart hoch positioniert, dass sein Ablauf in eine zweite Verteileinheit geleitet werden kann, welche den zweiten Filtertyp bauartgerecht beschickt. Auf diese Weise ist eine Kaskadierung verschiedenster Filtertypen, aber auch mehrerer baugleicher Filtertypen möglich. Hintereinander vorgesehene Verteileinheiten können nicht nur durch Höhendifferenzen sondern auch durch Heber mit Wasser versorgt werden, sodass derart zusätzlich eine Belüftung des Wassers zwischen den einzelnen Filterpassagen erfolgt. Die für den Betrieb der Verteileinheiten erforderlichen Antriebe, wie Pumpen, Rohrpumpen, Heber und dergleichen, können gleichzeitig Wasserspiele oder Skimmereinrichtungen betreiben. Um einen ausreichenden Wasserdruck für Wasserspiele, wie Quellsteine und dergleichen, sicherzustellen, kann die Verteileinheit höher als der Wasserspiegel des Gewässers positioniert und druckseitig betrieben werden. Die Verteileinheit kann auch in Form einer Säule mit integrierter Pumpe, Rohrpumpe und dergleichen aufgestellt werden. Die Säule kann auch als Wasserspiel gestaltet werden. Solche Einheiten ersetzen daher auf besonders energiesparende Weise klassische Pumpenschächte oder Wandboards, bei welchen die Verteilung durch Druckaufbau an Schiebern und Hähnen erfolgt.

### Bezugsziffernliste

- 1: innerer Behälter
- 1a: oberer Rand
- 2: Anschluss
- 2a: Rohr- bzw. Schlauchleitung
- 3: Einschnitt
- 4: äußerer Behälter
- 5: Anschluss
- 5a: Rohr- bzw. Schlauchleitung
- 6: Zwischenwand
- 7: Boden
- 8: Abteil
- 9: Trennwand
- 10: Blende
- 11: Skala
- 12: Pumpe
- 13: Rohrpumpe
- 14: Zuleitung
- 15: Filtereinheit
- 15': Filtereinheit
- 15": Filtereinheit
- 16: Fuß
- 17: Gitter
- 18: Aufnahmebehälter
- 19: Dolomitkies oder -bruch
- 20: Zeolith
- 21: Verteilleitung
- 22: Wartungsschacht
- 23: Abtrennung
- 24: Sandfilter
- 25: Behälter
- 26: Stellfuß
- 27: Gitter
- 28: Gitter
- 29: Filterraum
- 30: Raum
- 31: Einlaufkammer
- 32: Druckluftschlauch
- 33: Druckluftverteilungsleitung
- 34: Sandschicht

## Patentansprüche

1. Verteileinheit für den Einsatz in einem Gewässer zur kontrollierten Wasserversorgung von Filtereinheiten (15, 15', 15") und/oder zum Betrieb von Wasser benützenden Einrichtungen,
**dadurch gekennzeichnet,**
**dass** sie einen inneren und einen äußeren Behälter (1, 4) aufweist, zwischen welchen Behältern (1, 4) zumindest zwei oben offene Abteile (8) gebildet sind, wobei am oberen Rand des inneren Behälters (1) ausgebildete Einschnitte (3) Fließverbindungen für Wasser zwischen den Abteilen (8) und dem Inneren des inneren Behälters (1) herstellen, und wobei jedes Abteil (8) und der innere Behälter (1) mit zumindest einem Anschluss (2, 5) zur Zu- oder Ableitung von Wasser versehen ist.

2. Verteileinheit nach Anspruch 1, **dadurch gekennzeichnet, dass** die Einschnitte (3) V-förmig oder U-förmig sind.

3. Verteileinheit nach Anspruch 1, **dadurch gekennzeichnet, dass** im inneren Behälter (1) eine Kreiselpumpe (12), eine Rohrpumpe (13) oder eine Heber eingebaut ist.

4. Verteileinheit nach Anspruch 1 oder 3, **dadurch gekennzeichnet, dass** der innere und der äußere Behälter (1,4) zylinderförmig oder als Prismen, insbesondere als reguläre Prismen, ausgeführt und ineinander angeordnet sind.

5. Verteileinheit nach Anspruch 1 oder 3, **dadurch gekennzeichnet, dass** der innere Behälter (1) von Zwischenwänden im äußeren Behälter (4) gebildet ist.

6. Verteileinheit nach einem der Ansprüche 1 bis 5, **dadurch gekennzeichnet, dass** zumindest einige Einschnitte (3) entweder übereinstimmend ausgeführt sind oder unterschiedliche Querschnittsflächen aufweisen.

7. Verteileinheit nach Anspruch 6, **dadurch gekennzeichnet, dass** ein oder mehrere Abteil(e) (8) über Einschnitte (3) gleicher Dimensionierung mit dem inneren Behälter (1) in Verbindung sind, während zumindest ein anderes Abteil (8) über ein oder mehrere Einschnitte (3) mit anderer Dimensionierung mit dem inneren Behälter (1) in Verbindung sind.

8. Verteileinheit nach einem der Ansprüche 1 bis 7, **dadurch gekennzeichnet, dass** die Querschnittsfläche zumindest eines Einschnittes (3), insbesondere mittels einer Blende (10), variabel einstellbar bzw. veränderbar ist.

9. Verwendung der Verteileinheit nach einem oder mehreren der Ansprüche 1 bis 8 im saugseitigen oder druckseitigen Betrieb in einem System zur Filterung von Wasser eines Gewässers mit mindestens zwei Filtereinheiten (15, 15', 15") gleicher oder unterschiedlicher Bauart.

10. Verwendung der Verteileinheit nach Anspruch 9 in einem System zur Filterung von Wasser mit zumindest einer Filtereinheit (15) aus Steinwolle, insbesondere in einem System zur Filterung von Wasser mit mehreren Filtereinheiten (15) aus Steinwolle, welche direkt auf die Verteileinheit aufgesteckt sind.

11. Verwendung der Verteileinheit nach Anspruch 9 in einem System zur Filterung von Wasser mit Filtereinheiten, welche Segmente eines langsam durchströmten Sandfilters sind.

12. Verwendung der Verteileinheit nach Anspruch 9 in einem System zur Filterung von Wasser mit zumindest einer Filtereinheit (15'), welche eine Schicht oder mehrere Schichten (19, 20) aus geschütteten Filtermaterialien, wie Zeolith, Kies, Blähton und dergleichen, enthält, insbesondere in einem System zur Filterung von Wasser mit zumindest einer Filtereinheit (15') deren oberste Schicht ein Sandfilter ist.

13. Verwendung der Verteileinheit nach Anspruch 9 in einem System zur Filterung von Wasser mit einer Filtereinheit (15 "), welche einen Schwebebettfilter aufweist, wobei auf dem Schwebebettmaterial insbesondere eine Sandfilterschicht aufgebracht ist.

14. System zur Filterung eines Gewässers mit mindestens zwei Filtereinheiten und mit zumindest einer Verteileinheit nach einem oder mehreren der Ansprüche 1 bis 8, wobei vorzugsweise mehrere Filtereinheiten mit zwischen ihnen angeordneten Verteileinheiten vorgesehen sind.

15. System nach Anspruch 14, **dadurch gekennzeichnet, dass** es andere Wasser benützende Einrichtungen, wie Quellsteine, Wasserspiele, Bachläufe, Skimmer, Anströmdüsen und dergleichen enthält, welche von zumindest einer Verteileinheit mit Wasser versorgt sind.

## Claims

1. Distributor unit for use in a body of water for the controlled supply of water to filter units (15, 15', 15") and/or for operating water-using equipment,
**characterized in that**
it has an inner and an outer container (1, 4), between which containers (1, 4) at least two compartments (8) which are open at the top are formed, wherein notches (3) formed in the upper edge of the inner container (1) create flow connections for water between the compartments (8) and the inside of the inner container (1), and wherein each compartment (8) and the inner container (1) is provided with at least one connection (2, 5) for the supply or discharge of water.

2. Distributor unit according to Claim 1, **characterized in that** the notches (3) are V-shaped or U-shaped.

3. Distributor unit according to Claim 1, **characterized in that** a centrifugal pump (12), a tube pump (13) or a lifter is fitted in the inside of the container (1).

4. Distributor unit according to Claim 1 or 3, **characterized in that** the inner and outer containers (1, 4) are configured cylindrically or as prisms, particularly as regular prisms, and are arranged inside one another.

5. Distributor unit according to Claim 1 or 3, **characterized in that** the inner container (1) is formed by intermediate walls in the outer container (4).

6. Distributor unit according to one of Claims 1 to 5, **characterized in that** at least a few notches (3) are either designed in a congruent manner or have different cross-sectional surfaces.

7. Distributor unit according to Claim 6, **characterized in that** one or more compartment(s) (8) is/are connected via notches (3) of the same dimensions as the inner container (1), while at least one other compartment (8) is connected via one or more notches (3) with different dimensions to the inner container (1).

8. Distributor unit according to one of Claims 1 to 7, **characterized in that** the cross-sectional surface of at least one notch (3) can be variably adjusted or changed, particularly by means of an aperture (10).

9. Use of the distributor unit according to one or more of Claims 1 to 8 during suction-side or pressure-side operation in a system for filtering water in a body of water having at least two filter units (15, 15', 15") of identical or different design.

10. Use of the distributor unit according to Claim 9 in a system for filtering water having at least one filter unit (15) made of rock wool, particularly in a system for filtering water with a plurality of filter units (15) made of rock wool which are mounted directly on the distributor unit.

11. Use of the distributor unit according to Claim 9 in a system for filtering water having filter units which are segments of a sand filter with a slow flow rate.

12. Use of the distributor unit according to Claim 9 in a system for filtering water having at least one filter unit (15') which contains a layer or a plurality of layers (19, 20) of bulk filter materials, such as zeolite, gravel, expanded clay and the like, particularly in a system for filtering water which has at least one filter unit (15'), the uppermost layer being a sand filter.

13. Use of the distributor unit according to Claim 9 in a system for filtering water having a filter unit (15") which exhibits an expanded bed filter, wherein a sand filter layer, in particular, is applied to the expanded bed filter.

14. System for filtering a body of water having at least two filter units and at least one distributor unit according to one or more of Claims 1 to 8, wherein a plurality of filter units with distributor units arranged therebetween is advantageously provided.

15. System according to Claim 14, **characterized in that** it contains other water-using equipment such as rock fountains, water features, lazy rivers, skimmers, inflow nozzles and the like, which are supplied with water by at least one distributor unit.

## Revendications

1. Unité de distribution pour utilisation dans un milieu aquatique pour une alimentation en eau contrôlée d'unités de filtration (15, 15', 15") et/ou pour l'exploitation d'équipements consommateurs d'eau,
**caractérisée en ce**
**qu'**elle présente un réservoir interne et un réservoir externe (1, 4), entre lesquels réservoirs (1,4) sont prévus au moins deux compartiments ouverts en haut (8), où des incisions (3) pratiquées sur le rebord supérieur du réservoir interne (1) constituent des raccords d'écoulement pour l'eau entre les compartiments (8) et l'intérieur du réservoir interne (1), et où chaque compartiment (8) et le réservoir interne (1) sont pourvus d'au moins un raccordement (2, 5) pour l'arrivée ou l'évacuation de l'eau.

2. Unité de distribution selon la revendication 1, **caractérisée en ce que** les incisions (3) sont en forme de V ou en forme de U.

3. Unité de distribution selon la revendication 1, **caractérisée en ce que** le réservoir interne (1) abrite une pompe centrifuge (12), une pompe à tubes (13) ou une pompe de drainage.

4. Unité de distribution selon la revendication 1 ou la revendication 3, **caractérisée en ce que** le réservoir interne et le réservoir externe (1, 4) sont de forme cylindrique ou de prismes, en particulier de prismes réguliers et encastrés l'un dans l'autre.

5. Unité de distribution selon la revendication 1 ou la revendication 3, **caractérisée en ce que** le réservoir interne (1) est constitué de cloisons intermédiaires dans le réservoir externe (4).

6. Unité de distribution selon l'une des revendications 1 à 5, **caractérisée en ce qu'**au moins certaines incisions (3) sont superposées ou bien qu'elles présentent des surfaces de sections transversales différentes.

7. Unité de distribution selon la revendication 6, **caractérisée en ce qu'**un ou plusieurs compartiment(s) (8) sont reliés au réservoir interne (1) par des incisions (3) de même dimensionnement, tandis qu'au moins un autre compartiment (8) est relié au réservoir interne (1) par une ou plusieurs incisions (3) d'un autre dimensionnement.

8. Unité de distribution selon l'une des revendications 1 à 7, **caractérisée en ce que** les surfaces de section transversale d'au moins une incision (3), notamment au moyen d'un orifice (10), sont réglables ou modifiables de façon variable.

9. Utilisation de l'unité de distribution selon une ou plusieurs des revendications 1 à 8 dans l'exploitation côté aspiration ou côté pression dans un système de filtration d'eau d'un milieu aquatique avec moins deux unités de filtration (15, 15', 15") de conception identique ou différente.

10. Utilisation de l'unité de distribution selon la revendication 9 dans un système de filtration d'eau comprenant au moins une unité de filtration (15) en laine de roche, en particulier dans un système de filtration d'eau comprenant plusieurs unités de filtration (15) en laine de roche, qui sont directement posées sur l'unité de distribution.

11. Utilisation de l'unité de distribution selon la revendication 9 dans un système de filtration d'eau comprenant des unités de filtration consistant en segments de filtre à sable lentement traversés.

12. Utilisation de l'unité de distribution selon la revendication 9 dans un système de filtration d'eau comprenant au moins une unité de filtration (15'), contenant une couche ou plusieurs couches (19, 20) de matériaux filtrants déversés, par exemple en zéolithe, gravier, argile expansée et similaire, en particulier, dans un système de filtration d'eau comprenant au moins une unité de filtration (15') dont la couche supérieure est un filtre à sable.

13. Utilisation de l'unité de distribution selon la revendication 9 dans un système de filtration d'eau comprenant une unité de filtration (15"), qui présente un filtre à lit flottant, où une couche de filtre à sable notamment est prévue sur le matériau de lit flottant.

14. Système de filtration d'un milieu aquatique comportant au moins deux unités de filtration et au moins une unité de distribution selon l'une ou plusieurs des revendications 1 à 8, où de préférence plusieurs unités de filtration sont pourvues d'unités de distribution entre elles.

15. Système selon la revendication 14, **caractérisé en ce qu'**il contient d'autres équipements consommateurs d'eau, comme des pierres bouillonnantes, des jeux d'eau, des cours d'eau, des aspirateurs de surface, des buses d'aspersion et similaires, qui sont alimentés en eau par au moins une unité de distribution.
